(19) Europäisches Patentamt
European Patent Office
Office européen des brevets

(11) Veröffentlichungsnummer: **0 018 590**
**B1**

# (12) EUROPÄISCHE PATENTSCHRIFT

(45) Veröffentlichungstag der Patentschrift: **17.02.82**

(51) Int. Cl.³: **C 09 B 62/09,** D 06 P 3/66

(21) Anmeldenummer: **80102187.4**

(22) Anmeldetag: **23.04.80**

(54) **Verfahren zum Färben hydroxylgruppenhaltigen Textilmaterials sowie reaktive Disazofarbstoffe der Dichlortriazinreihe.**

(30) Priorität: **27.04.79 DE 2917059**

(43) Veröffentlichungstag der Anmeldung: **12.11.80 Patentblatt 80/23**

(45) Bekanntmachung des Hinweises auf die Patenterteilung: **17.02.82 Patentblatt 82/7**

(84) Benannte Vertragsstaaten: **CH DE FR GB IT LI**

(56) Entgegenhaltungen:
**CH-A-381 347**
**CH-A-471 870**
**FR-A-2 128 413**
**FR-A-2 360 641**
**GB-A-2 012 821**

(73) Patentinhaber: **BASF Aktiengesellschaft, Carl-Bosch-Strasse 38, D-6700 Ludwigshafen (DE)**

(72) Erfinder: **Krueger, Heinz, Dr., Kalmitstrasse 15, D-6833 Waghaeusel (DE)**

**EP 0 018 590 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zum Färben hydroxylgruppenhaltigen Textilmaterials sowie reaktive Disazofarbstoffe der Dichlortriazinreihe

Die Erfindung betrifft ein Verfahren zum Färben von hydroxylgruppenhaltigen Textilmaterial, das dadurch gekennzeichnet ist, daß man Farbstoffe verwendet, die in Form der freien Säuren der allgemeinen Formel I

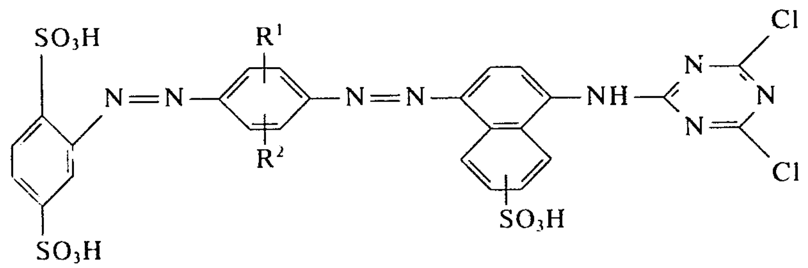

I

entsprechen, in der

$R^1$ Wasserstoff, Methyl, Äthyl oder $C_1$- bis $C_4$-Alkoxy und

$R_2$ Wasserstoff, Methyl, Äthyl, Acetamino oder $C_1$- bis $C_4$-Alkoxy sind, und in der die $SO_3H$-Gruppe im Naphthalinring in 6- oder 7-Stellung steht.

Zur Herstellung der Verbindungen der Formel I kann man z. B. Verbindungen der Formel II

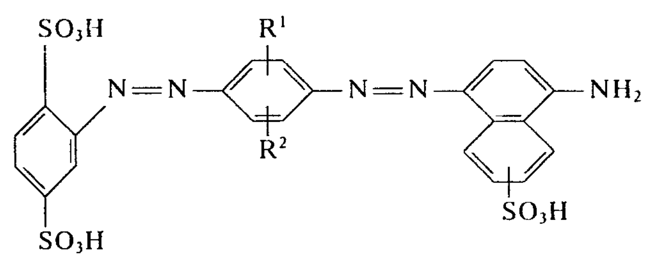

mit Cyanurchlorid umsetzen.

Einzelheiten der Herstellung können den Beispielen entnommen werden, in denen sich Angaben über Teile und Prozente, sofern nicht anders vermerkt, auf das Gewicht beziehen.

Die Verbindungen der Formel I eignen sich vorzüglich zum Färben von hydroxylgruppenhaltigen Fasern, z. B. Wolle, Seide und Leder und insbesondere von Cellulose, z. B. in Form von Baumwolle oder Zellwolle.

Man erhält gelbbraune bis dunkelbraune Färbungen mit guten Echtheiten, von denen die Licht- und Naßechtheiten besonders genannt seien. Hervorzuheben ist die hohe Farbstärke.

Als Färbeverfahren eignen sich insbesondere das Kaltauszieh- und Kaltverweilverfahren.

Von besonderer Bedeutung ist der neue Farbstoff der Formel III

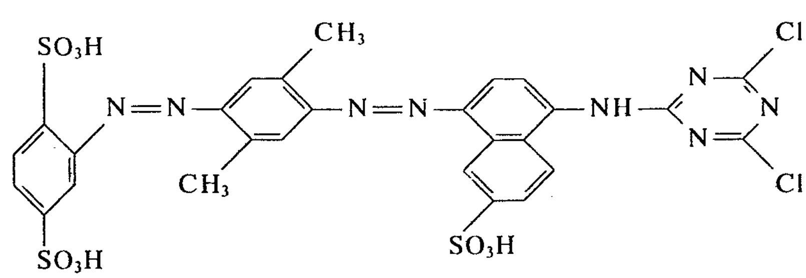

III

der sich durch eine hervorragende Farbstärke auszeichnet.

## Beispiel 1

55,7 Teile Anilin-2,5-disulfonsäure werden in 150 Teilen Wasser und 220 Teilen Eis mit 15,2 Teilen Natriumnitrit und 35 Teilen Salzsäure (d = 1,09) 1 Stunde bei 0—5° C diazotiert. Nach Zugabe von 0,5 Teilen Amidosulfonsäure läßt man 26,6 Teile p-Xylidin einlaufen und führt die Kupplung durch Zugabe von 30 Teilen Natronlauge (d = 1,22) im schwach sauren pH-Bereich zu Ende. Die Lösung wird darauf

mit 16,7 Teilen Natriumnitrit, 220 Teilen Eis und 79 Teilen Salzsäure (d = 1,09) 2 Stunden gerührt. Danach werden 1 Teil Amidosulfonsäure, 49,1 Teile Clevesäure-6 und 5,5 Teile Trinatriumphosphat zugegeben. Zur Vervollständigung der Kupplungsreaktion wird mit 25 Teilen Natronlauge (d = 1,52) ein schwach saurer pH-Wert eingestellt. Dann wird eine feine Suspension von 42,6 Teilen Cyanurchlorid in 440 Teilen Eiswasser hinzugefügt. Die Mischung wird 2 bis 3 Stunden bei Raumtemperatur gerührt. Der pH-Wert wird dabei durch Zugabe von 70 Teilen Natronlauge (d = 1,22) im schwach sauren bis neutralen Bereich gehalten. Der Farbstoff wird durch Zerstäubungstrocknung der Reaktionslösung isoliert.

Von dem so erhaltenen Farbstoff wird eine 2,4%ige Lösung hergestellt. Das zu färbende Material wird mit dieser Lösung und 50 g/l Natriumsulfat 30 Minuten bei 30° C und dann nach Zusatz von 20 g/l Soda weitere 60 Minuten bei 30° C behandelt, wobei das Flottenverhältnis 1 : 15 beträgt. Das Färbegut wird anschließend kalt, heiß und kalt gespült, mit Essigsäure neutralisiert und mit 2 g/l Waschmittel 15 Minuten bei Kochtemperatur geseift. Man erhält gelbstichig braune Färbungen mit guter Naß- und Lichtechtheit, wobei sich der genannte Farbstoff besonders durch eine hervorragende Ausgiebigkeit auszeichnet.

Ähnlich gute Ergebnisse werden erzielt, wenn man nicht mercerisierten Baumwolle-Köper mit einer Lösung von 18 g/l des genannten Farbstoffes und 30 g/l Soda bis zu einer Flottenaufnahme von 75% foulardiert, das naß aufgerollte und in Folie luftdicht verpackte Färbegut 8 Stunden verweilen läßt und anschließend, wie oben beschrieben, neutralisiert, wäscht und seift.

Weitere Beispiele erfindungsgemäßer Farbstoffe können der folgenden Tabelle entnommen werden, wobei in der Spalte I die Kupplungskomponenten aufgeführt sind, die an die Stelle des p-Xylidins in Beispiel 1 treten. Die Spalte II bezeichnet die Stellung der Sulfogruppe in der verwendeten Clevesäure, die Spalte III die bei der Färbung erzielte Nuance.

| Bsp. | I | II | III |
|---|---|---|---|
| 2 | 2-Methoxy-5-methylanilin | 6 | orangebraun |
| 3 | 2-Methoxy-5-acetaminoanilin | 6/7 | rotbraun |
| 4 | 2,5-Dimethoxyanilin | 6 | rotbraun |

**Patentansprüche**

1. Verfahren zum Färben von hydroxylgruppenhaltigem Textilmaterial, dadurch gekennzeichnet, daß man Farbstoffe verwendet, die in Form der freien Säuren der allgemeinen Formel I

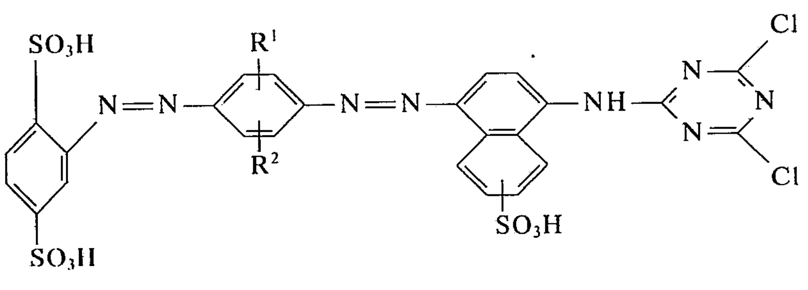 I

entsprechen, in der

$R^1$ Wasserstoff, Methyl, Äthyl oder $C_1$- bis $C_4$-Alkoxy und
$R^2$ Wasserstoff, Methyl, Äthyl, Acetamino oder $C_1$- bis $C_4$-Alkoxy sind, und in der die $SO_3H$-Gruppe im Naphthalinring in 6- oder 7-Stellung steht.

2. Der Farbstoff der Formel

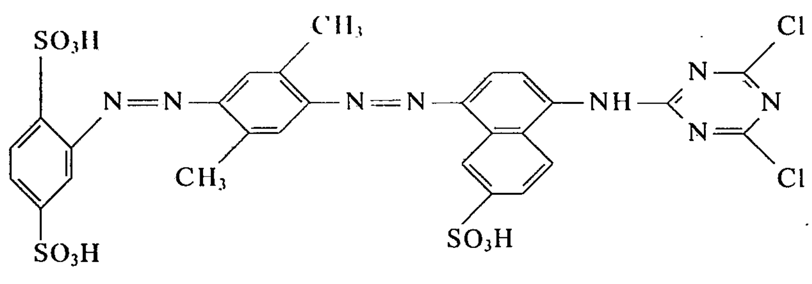

## Claims

1. A process for dyeing hydroxyl-containing textile material, characterized in that dyes are used which in the form of the free acids are of the general formula I

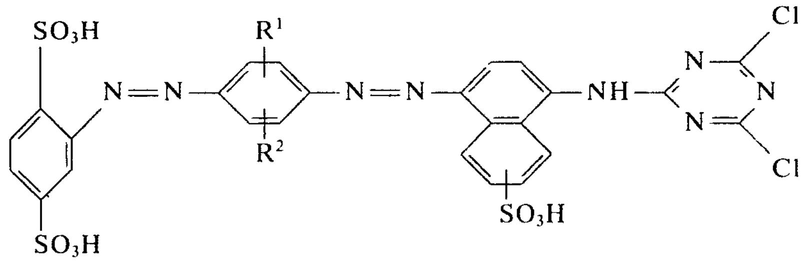

I

where $R^1$ is hydrogen, methyl, ethyl or $C_1-C_4$ alkoxy, and $R^2$ is hydrogen, methyl, ethyl, acetamino or $C_1-C_4$ alkoxy, and where the $SO_3H$ group in the naphthalene ring is in the 6- or 7-position.

2. The dye of the formula

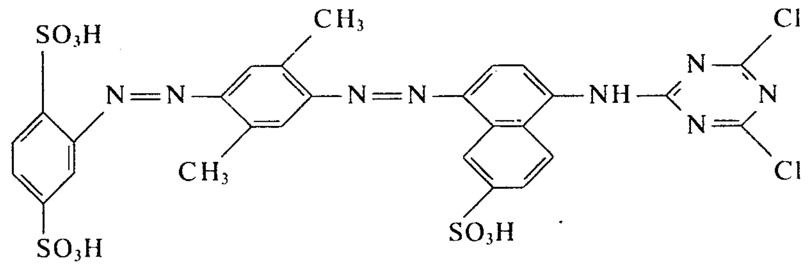

## Revendications

1. Procédé pour la teinture de matières textiles contenant des groupes hydroxyles, caractérisé en ce qu'on utilise des colorants qui, sous la forme des acides libres, répondent à la formule générale I

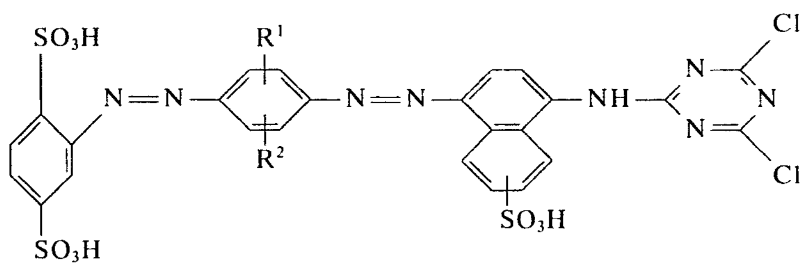

(I)

dans laquelle

$R^1$ représente un hydrogène, un méthyle, un éthyle ou un alcoxy à 1–4 C et
$R^2$ représente un hydrogène, un méthyle, un éthyle, un acétamino ou un alcoxy à 1–4 C,

et dans laquelle le groupe $SO_3H$ dans le noyau naphtalénique se trouve en position 6 ou 7.

2. Le colorant de formule

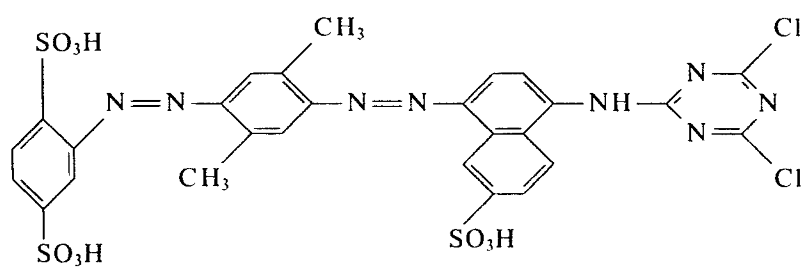

(I)